# EUROPEAN PATENT SPECIFICATION

(11) **EP 1 483 950 B1**
(45) Date of publication and mention of the grant of the patent: **22.07.2009**
(21) Application number: 04253096.4
(22) Date of filing: 26.05.2004
(51) Int. Cl.: A01B 35/22

(54) **Tine shoe securing arrangement**
Pflugscharspitzehalterung
Dispositif de fixation pour une pointe de soc

(30) Priority: 05.06.2003 GB 0312957
(43) Date of publication of application: 08.12.2004
(73) Proprietor: McConnel Ltd, Shropshire SY8 1JL (GB)
(72) Inventor: Biggs, John Arthur, Knighton Powys LD7 1LE (GB)
(74) Representative: Croston, David

(56) References cited:
- FR-A- 550 585
- GB-A- 678 382
- US-A- 2 895 559
- US-A- 3 006 089

## Description

The present invention relates to a tine shoe for use on a tine of an agricultural cultivator, a tine assembly and a method of securing a tine shoe to a tine.

Tines for use on agricultural cultivators generally comprise means for mounting to a chassis of a cultivator, a downwardly depending leg part which curves into a pointed foot part. A tine is intended to provide deep, aggressive cultivation of soil and can be combined with other cultivating equipment on a cultivator. Because of the aggressive nature of the use of the tine, the tine surfaces are subjected to substantial wear. As a result, it is customary to fit a removable shroud or shoe over the foot part of the tine which is subject to the most aggressive wear. Consequently, the tine shoe is subjected to the wear and when the tine shoe has worn beyond the point where it is effective it can be removed and replaced with a new shoe obviating the need to replace the entire tine. Currently, tine shoe removal requires a special tool to be fitted to the tine which is then struck with a substantial, long-handled hammer with a mild steel head. Removal of the tine shoe, which itself is made from a substantial piece of steel, presents possible risk of injury to the user. Firstly the user has to strike the shoe removal tool with a heavy hammer which itself can lead to the risk of injury. Secondly, eye protection must be worn to prevent eye injury due, for example, to chips flying off the tine shoe or hammer or the shoe removal tool. Thirdly, there is the risk that the shoe will strike either the user or a bystander upon removal.

A known tine assembly is the subject of US patent 3006089.

Accordingly, it is an object of the invention to provide an improved tine shoe, a tine assembly and method for securing a tine shoe to a tine with improved removal characteristics.

According to a first aspect of the invention there is provided a tine shoe according to claim 1.

According to a second aspect of the invention there is provided a tine shoe for use on a tine of an agricultural cultivator and a tine shoe securing insert according to claim 2.

According to a third aspect of the invention there is provided a tine assembly for use on an agricultural cultivator according to claim 3.

The aperture arranged to receive the tine foot preferably tapers inwardly from the rear of the tine shoe towards the front. The inner most part of the aperture preferably receives the tine foot with a small clearance fit. In that way a certain amount of "play" is provided as the tine foot is inserted into the tine shoe but when fully inserted there is less clearance to prevent the shoe from wobbling on the foot. The aperture may be defined at least in part by an upper substantially flat surface and a lower substantially flat surface with an angle A therebetween. The angle A is greater than the angle B defined between the upper and lower surfaces of the tine foot. The angle A is preferably 1° to 5° degrees greater than angle B, most preferably approximately 3° degrees greater. In that way, some "vertical" play is provided.

The recess is preferably defined in an upper part of the surface which defines the aperture in the tine shoe. The formation is preferably provided inbound of the tine shoe relative to the recess. The part of the tine foot preferably includes a projection which is arranged to co-operate with the formation on the tine shoe.

The tine foot securing insert is preferably dimensioned so that, when the tine foot is received in the tine shoe and the insert is received in the recess, the insert effects an interference fit between the wall of the recess, the insert, the tine foot and the opposite inner surface of the tine shoe. The insert may be received simply by virtue of the interference fit. Preferably, however the insert is secured to the tine by further securing means. The further securing means preferably comprises a clamp for clamping the insert to the tine. The clamp is preferably spaced away from the tine foot and in such a case the insert extends from the tine foot to the location of the clamp. The clamp is preferably located on the tine at a position which would not normally encounter the soil, in use.

According to a fourth aspect of the invention there is provided a method for securing a tine shoe to a tine according to claim 17.

The method preferably further includes the step of securing the insert to the tine and most preferably includes the step of securing the insert to the tine by means of a clamp.

A tine assembly, a tine shoe and a method of securing a tine shoe to a tine will now be described in detail by way of example and with reference to the accompanying drawing in which:
Fig.1 is a perspective view of a tine assembly in accordance with the invention,
Fig.2 is a perspective view of a tine shoe in accordance with the invention,
Fig.3 is a perspective view of a shoe securing insert for use in the tine assembly of FIG.1,
Fig.4 is a sectional view of the tine shoe, tine foot and part of the securing insert of the tine assembly of Fig.1, and
Fig.5 is a plan sectional view of the tine shoe.

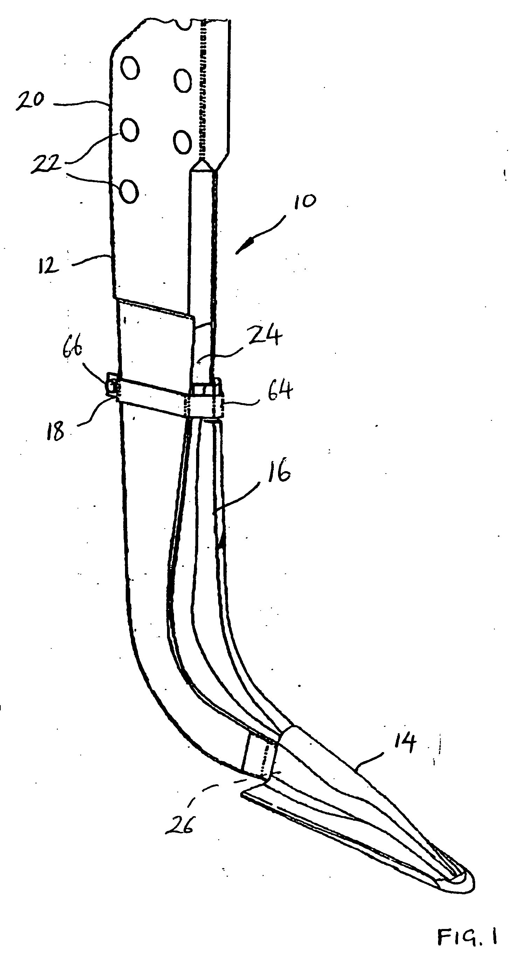

In Fig.1, a tine assembly is generally indicated at 10. The tine assembly 10 comprises a tine 12, a tine shoe 14, a tine shoe securing insert 16 and an insert clamp 18.

A tine 12 comprises an upper mounting part 20 having apertures 22 to enable the tine to be attached to an agricultural cultivator frame (not shown). The tine 12 further comprises a leg portion 24 which extends from the upper mounting portion 20 downwardly and curves into a foot portion 26 at the lower end thereof. The foot portion 26 is obscured by the shoe 14 in Fig.1.

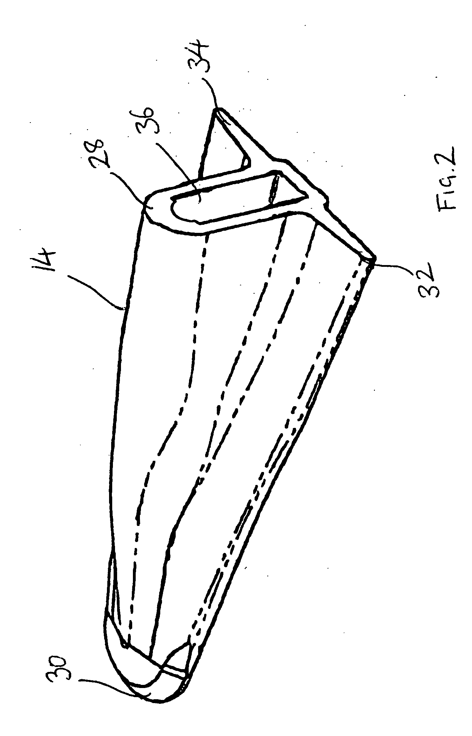

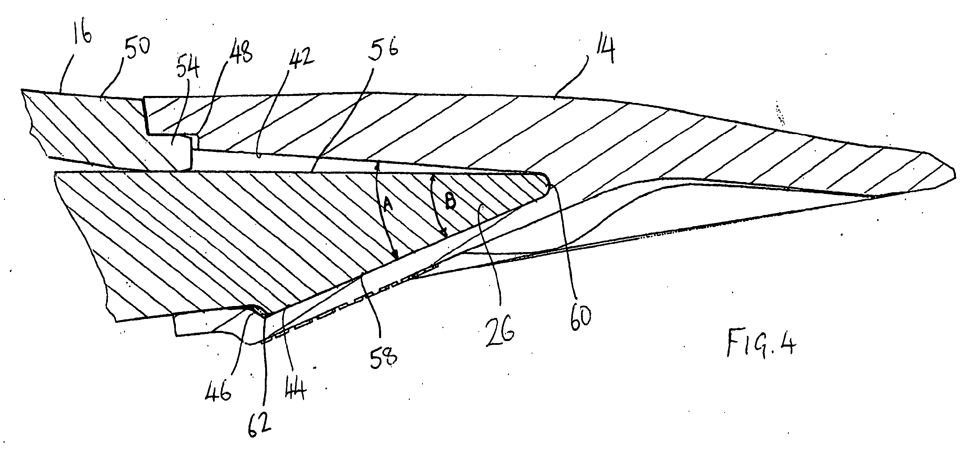

The shoe 14 is better illustrated in Figs.2 and 4. The shoe 14 comprises a main body part 28 which tapers to a rounded leading edge 30. Wings 32, 34 extend from opposite sides of the main body 28.

The main body 28 is hollow and defines an aperture 36 for receiving the foot 26 of the tine 12.

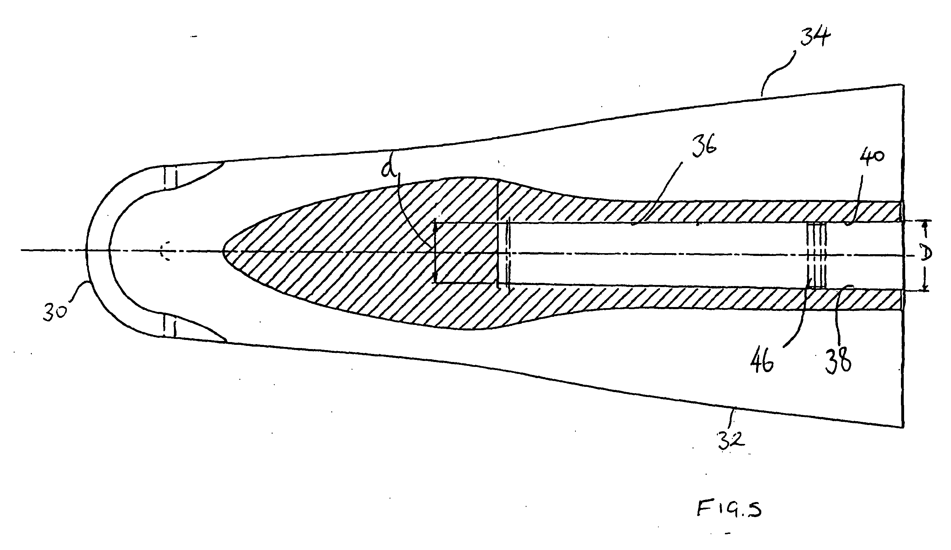

The aperture 36 is defined by inner side walls 38, 40 (Fig.5) and inner top and bottom walls 42, 44 respectively (Fig.4). The walls 38, 40 taper inwardly towards each other from the rear of the shoe towards the leading edge thereof so that the width d of the aperture 36 of the innermost point thereof is slightly less than the width D at the outermost point of the aperture 36. The width d at the innermost point of the aperture defines a small clearance, e.g. 0.5 mm with the width of the foot 26. The upper and lower walls 42, 44 which define the aperture 36 define an angle A, for example of 25° to 30° degrees therebetween.

At a point spaced inwardly from the outermost end of the aperture 36, the lower wall 44 is bent upwardly and then back towards the horizontal so as to define a shoulder 46 (Fig.4).

A recess 48 is defined in the upper wall 42 extending from the outermost end of the aperture 36 inwardly of the shoe 14 for a short distance. The shoulder 46 is defined at a position inbound of the in most extent of the recess 48.

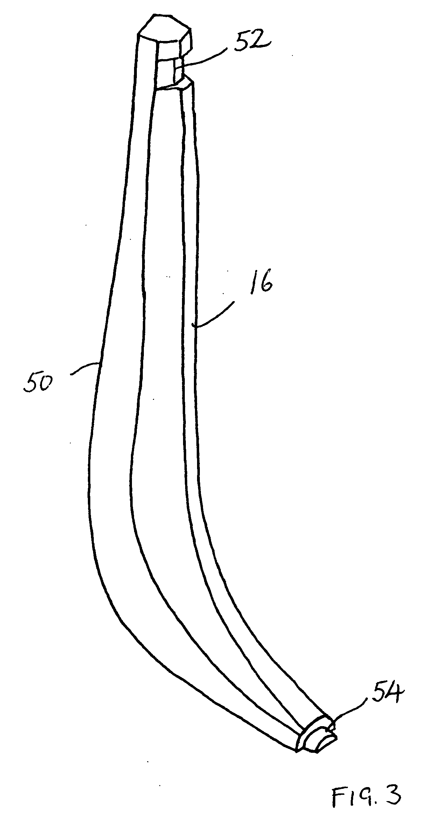

Turning to Fig.3, the tine shoe securing insert 16 comprises a generally L-shaped body 50 with a clamp receiving formation 52 at one end thereof and a shoe securing peg 54 formed at the other end thereof. The convex side of the L-shaped body 50 is shaped so as to conform substantially to the concave side of the leg portion 24 of the tine 12.

The tine foot 26 (Fig. 4) comprises a pointed end part of the tine 12 defined by an upper wall 56 and a lower wall 58 which define an angle B therebetween which is 1° to 5° less, preferably 3° approximately less than A. The walls 56, 58 terminate at their extreme end in a rounded point 60. The upper wall 56 is substantially straight and continuous. At a position spaced from the point 60, the lower wall bends upwardly towards the upper wall 56 and then back on itself so as to define a heel-like formation 62.

The clamp 18 comprises a metal strap 64 with a nut and bolt fastener 66 to enable the strap to be fastened in a loop around the tine.

In order to mount the tine shoe 14 on the tine foot 26, the tine shoe 14 is pushed onto the tine foot 26 so that the tine foot 26 is received in the aperture 36. The lower wall 58 of the foot 62 rides along the lower inner wall 44 and due to the tapering width of the aperture 36 which provides play in a lateral direction and the relative angles A and B which provides play in the vertical direction, the foot can be inserted inside the aperture in the shoe until the point 60 abuts the end of the aperture, the end of the aperture provides an interference fit in a lateral direction due to the tapering width and the heel portion 62 of the foot 26 has ridden over the shoulder 46 formed in the lower wall 44. The distance between the point 60 and the heel portion 62 is slightly less than the distance between the innermost end of the aperture 36 and the shoulder 46 so as to provide a slight clearance between the heel 62 of the foot 26 and the shoulder 46 of the shoe 14. Once the foot 26 is fully inserted, there is still a substantial amount of play in the vertical direction due to the differential between the angles A and B and the provision of the recess 48. Consequently, the securing insert 16 is arranged so that the tine shoe securing peg 54 extends into the aperture 48. The peg 54 is dimensioned so as to take up all of the remaining play between the upper and lower inner and lower walls 42, 44 of the aperture 36 and the upper walls 56, 58 of the foot 26. Accordingly, the tine shoe 14 is retained on the tine foot 26 by a combination of the abutment between the shoulder 46 and the heel 62 and the interference fit between the inner wall of the recess 48, the peg 54, the upper surface of the shoe 56, the lower surface of the shoe 58 and the lower inner wall 44.

The insert 16 is arranged along the front edge of the leg portion 44 of the tine 12 so that the convex portion of the insert conforms to and follows the concave portion of the leg 24. The upper part of the insert 16 is secured to the tine by engagement of the clamp 18 around the clamped receiving formation 52 on the insert and is secured in place by tightening of the fastening means 66.

In that way, secure mounting of the tine shoe 14 is provided without the need for the provision of a specific fitting tool.

Once the tine shoe has worn beyond its effective life, the user can replace the shoe readily by unscrewing the clamp 18 and removing the insert 16 so that there is sufficient vertical play between the walls 56, 58 of the tine foot and the inner walls 42, 44 of the aperture 36 of the tine shoe to enable the tine shoe to be manipulated in such a way that the heel 62 of the foot 26 clears the shoulder 46 formed on the lower wall 44 of the tine shoe. Thus a straight forward tine shoe removal method is provided without the need for specific removal tools and avoiding the need for a tremendous amount of force to be applied to the shoe in order to remove it. That, in turn, reduces the risk of accidents occurring due, for example, to breakage of the shoe or hammer mentioned above or the possibility that the shoe will strike a bystander upon removal.

Although the arrangement described provides the formation 46 on the lower wall 44 of the aperture 36 and the recess 48 in the upper wall 42, it will be appreciated that what is required is that the foot can be inserted into the shoe readily, absent the securing insert 16 and on insertion of the securing insert 16 into the recess, the foot cannot be readily removed from the shoe 14. The arrangement described has a further advantage that the insert 16 is arranged along the leading edge of the tine 12 which further protects the tine 12 from wear at a position where the shoe 14 could not provide that protection.

## Claims

1. A tine shoe (14) for use on a tine (12) of an agricultural cultivator, the shoe having mounting means to enable it to be removably mounted on the tine, the mounting means comprising an aperture (36) arranged to receive a tine foot (26), a formation (46) against which a part of the tine foot can abut and a recess (48) arranged to receive a tine foot securing insert (16) whereby, when a tine foot (26) is received in the aperture and a tine foot securing insert (16) is received in the recess, the tine shoe is prevented from being removed from a tine foot by the tine foot securing insert due to the abutment between a part of a tine foot (62) and the formation (46) and when no tine foot securing insert is received in the recess, the tine shoe can be removed from a tine foot **characterised in that** the formation (46) against which a rear part of the tine foot abuts is formed on the lower part of the inner surface (44) of the tine shoe which defines the aperture (36).

2. A tine shoe (14) for use on a tine of an agricultural cultivator and a tine shoe securing insert (16), a shoe having mounting means to enable it to be removably mounted on a tine (12), the mounting means comprising an aperture (36) arranged to receive a tine foot: (26), a formation (46) against which a part of the tine foot can abut and a recess (48) arranged to receive the tine foot securing insert whereby, when a tine foot is received in the aperture and the tine foot securing insert is received in the recess the tine shoe is prevented from being removed from a tine foot by the tine foot securing insert due to the abutment between a part of the foot (62) and the formation (46) and when the tine foot securing insert is not received in the recess, the tine shoe can be removed from a tine foot, **characterised in that** the formation against which a rear part of the tine foot abuts is formed on the lower part of the inner surface (44) of the tine shoe which defines the aperture (36).

3. A tine assembly (10) for use on an agricultural cultivator, the tine assembly comprising a tine (12) , a tine shoe (14) and a tine shoe securing insert (16), the tine comprising a tine foot (26), the tine shoe defining an aperture (36) for receiving the foot, a formation (46) against which a part of the tine foot can abut and a recess (48) arranged to receive the tine foot securing insert (16) whereby, when the tine foot is received in the aperture and the tine foot securing insert is received in the recess, the tine shoe is prevented from being removed from the tine foot by the tine foot securing insert due to the abutment of the part of the tine foot (62) with the formation (46) and when the tine foot securing insert is not received in the recess, the tine shoe can be removed from the tine foot by moving the tine shoe relative to the tine foot so that the part of the tine foot clears the formation, **characterised in that** the formation against which a rear part of the tine foot abuts is formed on the lower part of the inner surface (44) of the tine shoe which defines the aperture (36).

4. A tine shoe or tine assembly according to claim 1, 2 or 3, in which the aperture (36) arranged to receive the tine foot tapers inwardly from the rear of the tine shoe towards the front.

5. A tine shoe or tine assembly according to claim 4, in which the inner most part of the aperture receives the tine foot with a small clearance fit.

6. A tine shoe or tine assembly according to claim 4, or 5 in which the aperture is defined at least in part by an upper substantially flat surface (42) and a lower substantially flat surface (44) with an angle A therebetween and the angle A is greater than the angle B defined between the upper and lower surfaces of the tine foot.

7. A tine shoe or tine assembly according to claim 6, in which the angle A is preferably 1° to 5° degrees greater than the angle B.

8. A tine shoe or tine assembly according to claim 6 or 7, in which the angle A is preferably 3° degrees greater than angle B.

9. A tine shoe or tine assembly according to claim 1, in which the recess is defined in an upper part of the surface (44) which defines the aperture in the tine shoe.

10. A tine shoe or tine assembly according to any preceding claim, in which the formation is provided inbound of the tine shoe relative to the recess.

11. A tine shoe or tine assembly according to any preceding claim, in which the rear part of the tine foot includes a projection which is arranged to co-operate with the formation on the tine shoe.

12. A tine shoe or tine assembly according to any preceding claim, in which the tine foot securing insert is dimensioned so that, when the tine foot is received in the tine shoe and the insert is received in the recess, the insert effects an interference fit between the wall of the recess, the insert, the tine foot and the opposite inner surface of the tine shoe.

13. A tine shoe or tine assembly according to any preceding claim, in which the insert is secured to the tine by further securing means (64).

14. A tine shoe or tine assembly according to claim 13, in which the further securing means comprises a clamp (64) for clamping the insert to the tine.

15. A tine shoe or tine assembly according to claim 14, in which the clamp (64) is spaced away from the tine foot and the insert extends from the tine foot to the location of the clamp.

16. A tine shoe or tine assembly according to claim 14 or 15, in which the clamp is located on the tine at a position which would not normally encounter the soil, in use.

17. A method for securing a tine shoe to a tine, comprising the steps of providing a tine (12) having a tine foot (26), providing a tine shoe (14) having an aperture (36) arranged to receive the tine foot, a formation (46) against which a rear part of the tine foot (62) can abut formed on the lower part of the inner surface (44) of the tine shoe which defines the aperture (36) and a recess (48) arranged to receive a tine foot securing insert (16), providing a tine foot securing insert (16), arranging the shoe on the foot so that the foot extends into the aperture arranged to receive the foot and a rear part of the foot abuts the formation and inserting the tine foot securing inserting into the recess with an interference fit so that the abutment of the formation with the rear part of the foot prevents the shoe from being removed from the foot.

18. A method for securing a tine shoe to a tine according to claim 17, in which the method further includes the step of securing the insert to the tine.

19. A method for securing a tine shoe to a tine according to claim 18, in which the step of securing the insert to the tine is effected by means of a clamp (64).

## Patentansprüche

1. Zinkenschuh (14) zur Verwendung an einem Zinken (12) eines landwirtschaftlichen Kultivators, wobei der Schuh ein Befestigungsmittel aufweist, das ermöglicht, dass er demontierbar am Zinken befestigt werden kann, wobei das Befestigungsmittel eine Öffnung (36) umfasst, die dazu geeignet ist, einen Zinkenfuß (26) aufzunehmen, ferner eine Formation (46), gegen die ein Teil des Zinkenfußes stoßen kann, und eine Vertiefung (48), die so ausgeführt ist, dass sie einen den Zinkenfuß fixierenden Einsatz (16) aufnehmen kann, wodurch, wenn ein Zinkenfuß (26) in der Öffnung untergebracht ist und ein den Zinkenfuß fixierender Einsatz (16) in der Vertiefung untergebracht ist, der Zinkenschuh durch den den Zinkenfuß fixierenden Einsatz infolge des Anschlags zwischen einem Teil eines Zinkenfußes (62) und der Formation (46) daran gehindert wird, von einem Zinkenfuß entfernt zu werden, und wenn kein den Zinkenfuß fixierender Einsatz in der Vertiefung untergebracht ist, der Zinkenschuh von einem Zinkenfuß entfernt werden kann, **dadurch gekennzeichnet, dass** die Formation (46), gegen die ein hinterer Teil des Zinkenfußes stößt, am unteren Teil der Innenfläche (44) des Zinkenschuhs ausgebildet ist, die die Öffnung (36) definiert.

2. Zinkenschuh (14) zur Verwendung an einem Zinken eines landwirtschaftlichen Kultivators und den Zinkenschuh fixierender Einsatz (16), wobei ein Schuh ein Befestigungsmittel aufweist, das ermöglicht, dass er demontierbar an einem Zinken (12) befestigt werden kann, wobei das Befestigungsmittel eine Öffnung (36) umfasst, die dazu geeignet ist, einen Zinkenfuß (26) aufzunehmen, ferner eine Formation (46), gegen die ein Teil des Zinkenfußes stoßen kann, und eine Vertiefung (48), die so ausgeführt ist, dass sie einen den Zinkenschuh fixierenden Einsatz aufnehmen kann, wodurch, wenn ein Zinkenfuß in der Öffnung untergebracht ist und der den Zinkenschuh fixierende Einsatz in der Vertiefung untergebracht ist, der Zinkenschuh durch den den Zinkenschuh fixierenden Einsatz infolge des Anschlags zwischen einem Teil eines Zinkenfußes (62) und der Formation (46) daran gehindert wird, von einem Zinkenfuß entfernt zu werden, und wenn der den Zinkenschuh fixierende Einsatz nicht in der Vertiefung untergebracht ist, der Zinkenschuh von einem Zinkenfuß entfernt werden kann, **dadurch gekennzeichnet, dass** die Formation, gegen die ein hinterer Teil des Zinkenfußes stößt, am unteren Teil der Innenfläche (44) des Zinkenschuhs ausgebildet ist, die die Öffnung (36) definiert.

3. Zinkenanordnung (10) zur Verwendung an einem landwirtschaftlichen Kultivator, wobei die Zinkenanordnung einen Zinken (12), einen Zinkenschuh (14) und einen den Zinkenschuh fixierenden Einsatz (16) umfasst, wobei der Zinken einen Zinkenfuß (26) umfasst, wobei der Zinkenschuh eine Öffnung (36) zur Aufnahme des Fußes abgrenzt, ferner eine Formation (46), gegen die ein Teil des Zinkenschuhs stoßen kann, und eine Vertiefung (48), die so ausgeführt ist, dass sie den den Zinkenfuß fixierenden Einsatz (16) aufnehmen kann, wodurch, wenn ein Zinkenfuß in der Öffnung untergebracht ist und der den Zinkenfuß fixierende Einsatz in der Vertiefung untergebracht ist, der Zinkenschuh durch den den Zinkenfuß fixierenden Einsatz infolge des Anschlags zwischen einem Teil eines Zinkenfußes (62) und der Formation (46) daran gehindert wird, von einem Zinkenfuß entfernt zu werden, und wenn der den Zinkenfuß fixierende Einsatz nicht in der Vertiefung untergebracht ist, der Zinkenschuh durch Bewegen des Zinkenschuhs relativ zum Zinkenfuß, so dass der Teil des Zinkenfußes die Formation freigibt, von einem Zinkenfuß entfernt werden kann, **dadurch gekennzeichnet, dass** die Formation, gegen die ein hinterer Teil des Zinkenfußes stößt, am unteren Teil der Innenfläche (44) des Zinkenschuhs ausgebildet ist, die die Öffnung (36) definiert.

4. Zinkenschuh oder Zinkenanordnung nach Anspruch 1, 2 oder 3, bei dem sich die Öffnung (36), die angeordnet ist, um den Zinkenfuß aufzunehmen, vom Hinterteil des Zinkenschuhs zum Vorderteil hin nach innen hin verjüngt.

5. Zinkenschuh oder Zinkenanordnung nach Anspruch 4, wobei der am weitesten innen liegende Teil der Öffnung den Zinkenfuß mit einer kleinen Spielpassung aufnimmt.

6. Zinkenschuh oder Zinkenanordnung nach Anspruch 4 oder 5, wobei die Öffnung wenigstens teilweise durch eine obere, im Wesentlichen ebene Fläche (42) und eine untere, im Wesentlichen ebene Fläche (44) mit einem Winkel A dazwischen definiert ist und der Winkel A größer als der Winkel B ist, der zwischen der oberen und unteren Oberfläche des Zinkenfußes definiert ist.

7. Zinkenschuh oder Zinkenanordnung nach Anspruch 6, wobei der Winkel A vorzugsweise 1° bis 5° Grad größer als der Winkel B ist.

8. Zinkenschuh oder Zinkenanordnung nach Anspruch 6 oder 7, wobei der Winkel A vorzugsweise 3° Grad größer als der Winkel B ist.

9. Zinkenschuh oder Zinkenanordnung nach Anspruch 1, wobei die Vertiefung in einem oberen Teil der Fläche (44) definiert ist, die die Öffnung im Zinkenschuh definiert.

10. Zinkenschuh oder Zinkenanordnung nach einem der vorherigen Ansprüche, wobei die Formation einwärts des Zinkenschuhs relativ zur Vertiefung vorgesehen ist.

11. Zinkenschuh oder Zinkenanordnung nach einem der vorherigen Ansprüche, wobei der hintere Teil des Zinkenschuhs einen Buckel beinhaltet, der so ausgeführt ist, dass er mit der Formation auf dem Zinkenschuh zusammenwirkt.

12. Zinkenschuh oder Zinkenanordnung nach einem der vorherigen Ansprüche, wobei der den Zinkenfuß fixierende Einsatz so dimensioniert ist, dass wenn der Zinkenfuß im Zinkenschuh aufgenommen ist und der Einsatz in der Vertiefung aufgenommen ist, der Einsatz eine Presspassung zwischen der Wand der Vertiefung, dem Einsatz, dem Zinkenfuß und der gegenüberliegenden Innenfläche des Zinkenschuhs bewirkt.

13. Zinkenschuh oder Zinkenanordnung nach einem der vorherigen Ansprüche, wobei der Einsatz durch weitere Fixiermittel (64) am Zinken gehalten wird.

14. Zinkenschuh oder Zinkenanordnung nach Anspruch 13, wobei das weitere Fixiermittel eine Klammer (64) zum Festklemmen des Einsatzes am Zinken umfasst.

15. Zinkenschuh oder Zinkenanordnung nach Anspruch 14, wobei die Klammer (64) auf Abstand vom Zinkenschuh angeordnet ist und sich der Einsatz vom Zinkenfuß zur Einsatzstelle der Klammer erstreckt.

16. Zinkenschuh oder Zinkenanordnung nach Anspruch 14 oder 15, wobei sich die Klammer am Zinken an einer Position befindet, die bei Anwendung normalerweise nicht mit Erdreich in Berührung kommen würde.

17. Verfahren zur Fixierung eines Zinkenschuhs an einem Zinken, umfassend die Schritte des Bereitstellens eines Zinkens (12), der einen Zinkenfuß (26) aufweist, des Bereitstellens eines Zinkenschuhs (14), der eine Öffnung (36), die so ausgeführt ist, dass sie den Zinkenfuß aufnehmen kann, eine Formation (46), gegen die ein hinterer Teil des Zinkenfußes (62) stoßen kann, ausgebildet am unteren Teil der Innenfläche (44) des Zinkenschuhs, die die Öffnung definiert, und eine Vertiefung (48) aufweist, die so ausgeführt ist, dass sie einen den Zinkenfuß fixierenden Einsatz (16) aufnehmen kann, Bereitstellen eines den Zinkenfuß fixierenden Einsatzes (16), Anordnen des Schuhs am Fuß derart, dass sich der Fuß in die Öffnung erstreckt, die so ausgeführt ist, dass sie den Fuß aufnehmen kann, und ein hinterer Teil des Fußes gegen die Formation stößt, und Einsetzen des den Zinkenfuß fixierenden Einsatzes in die Vertiefung mit einer Presspassung, so dass der Anschlag der Formation mit dem hinteren Teil des Fußes verhindert, dass der Schuh vom Fuß entfernt wird.

18. Verfahren zur Fixierung eines Zinkenschuhs an einem Zinken nach Anspruch 17, wobei das Verfahren darüber hinaus den Schritt des Fixierens des Einsatzes am Zinken beinhaltet.

19. Verfahren zur Fixierung eines Zinkenschuhs an einem Zinken nach Anspruch 18, wobei der Schritt des Fixierens des Einsatzes am Zinken mittels einer Klammer (64) bewirkt wird.

## Revendications

1. Sabot à dent (14) destiné à être utilisé sur une dent (12) d'un cultivateur agricole, le sabot comportant des moyens de montage pour lui permettre d'être monté de façon amovible sur la dent, les moyens de montage comprenant une ouverture (36) agencée pour recevoir une base de dent (26), une formation (46) contre laquelle une partie de la base de dent peut prendre appui et un évidement (48) agencé pour recevoir une pièce rapportée de fixation de dent (16), moyennant quoi, lorsqu'une base de dent (26) est reçue dans l'ouverture et une pièce rapportée de fixation de dent (16) est reçue dans l'évidement, le sabot à dent est empêché d'être retiré d'une base de dent par la pièce rapportée de fixation de dent en raison de la prise d'appui entre une partie d'une base de dent (62) et la formation (46) et, lorsqu'aucune pièce rapportée de fixation de dent n'est reçue dans l'évidement, le sabot à dent peut être retiré d'une base de dent, **caractérisé en ce que** la formation (46) contre laquelle une partie arrière de la base de dent prend appui est formée sur la partie inférieure de la surface intérieure (44) du sabot à dent qui définit l'ouverture (36).

2. Sabot à dent (14) destiné à être utilisé sur une dent d'un cultivateur agricole et une pièce rapportée de fixation de sabot à dent (16), un sabot comportant des moyens de montage pour lui permettre d'être monté de façon amovible sur une dent (12), les moyens de montage comprenant une ouverture (36) agencée pour recevoir une base de dent (26), une formation (46) contre laquelle une partie de la base de dent peut prendre appui et un évidement (48) agencé pour recevoir la pièce rapportée de fixation de dent, moyennant quoi, lorsqu'une base de dent est reçue dans l'ouverture et la pièce rapportée de fixation de dent est reçue dans l'évidement, le sabot à dent est empêché d'être retiré d'une base de dent par la pièce rapportée de fixation de dent en raison de la prise d'appui entre une partie de la base (62) et la formation (46) et, lorsque la pièce rapportée de fixation de dent n'est pas reçue dans l'évidement, le sabot à dent peut être retiré d'une base de dent, **caractérisé en ce que** la formation contre laquelle une partie arrière de la base de dent prend appui est formée sur la partie inférieure de la surface intérieure (44) du sabot à dent qui définit l'ouverture (36) .

3. Ensemble de dent (10) destiné à être utilisé sur un cultivateur agricole, l'ensemble de dent comprenant une dent (12), un sabot à dent (14) et une pièce rapportée de fixation de sabot à dent (16), la dent comprenant une base de dent (26), le sabot à dent définissant une ouverture (36) destinée à recevoir la base, une formation (46) contre laquelle une partie de la base de dent peut prendre appui et un évidement (48) agencé pour recevoir la pièce rapportée de fixation de dent (16), moyennant quoi, lorsque la base de dent est reçue dans l'ouverture et la pièce rapportée de fixation de dent est reçue dans l'évidement, le sabot à dent est empêché d'être retiré de la base de dent par la pièce rapportée de fixation de dent en raison de la prise d'appui de la partie de la base de dent (62) avec la formation (46) et, lorsque la pièce rapportée de fixation de dent n'est pas reçue dans l'évidement, le sabot à dent peut être retiré de la base de dent en déplaçant le sabot à dent par rapport à la base de dent de sorte que la partie de la base de dent dégage la formation, **caractérisé en ce que** la formation contre laquelle une partie arrière de la base de dent prend appui est formée sur la partie inférieure de la surface intérieure (44) du sabot à dent qui définit l'ouverture (36) .

4. Sabot à dent ou ensemble de dent selon la revendication 1, 2 ou 3, dans lequel l'ouverture (36) agencée pour recevoir la base de dent s'effile vers l'intérieur à partir de l'arrière du sabot à dent vers l'avant.

5. Sabot à dent ou ensemble de dent selon la revendication 4, dans lequel la partie la plus intérieure de l'ouverture reçoit la base de dent avec un ajustement avec jeu de petite dimension.

6. Sabot à dent ou ensemble de dent selon la revendication 4 ou 5, dans lequel l'ouverture est définie au moins en partie par une surface supérieure sensiblement plate (42) et une surface inférieure sensiblement plate (44) avec un angle A entre celles-ci et l'angle A est supérieur à l'angle B défini entre les surfaces supérieure et inférieure de la base de dent.

7. Sabot à dent ou ensemble de dent selon la revendication 6, dans lequel l'angle A est supérieur à l'angle B selon de préférence 1° à 5° degrés.

8. Sabot à dent ou ensemble de dent selon la revendication 6 ou 7, dans lequel l'angle A est supérieur à l'angle B selon de préférence 3° degrés.

9. Sabot à dent ou ensemble de dent selon la revendication 1, dans lequel l'évidement est défini dans une partie supérieure de la surface (44) qui définit l'ouverture dans le sabot à dent.

10. Sabot à dent ou ensemble de dent selon une quelconque revendication précédente, dans lequel la formation est prévue vers l'intérieur du sabot à dent par rapport à l'évidement.

11. Sabot à dent ou ensemble de dent selon une quelconque revendication précédente, dans lequel la partie arrière de la base de dent comprend une saillie qui est agencée pour coopérer avec la formation sur le sabot à dent.

12. Sabot à dent ou ensemble de dent selon une quelconque revendication précédente, dans lequel la pièce rapportée de fixation de dent est dimensionnée de sorte que, lorsque la base de dent est reçue dans le sabot à dent et la pièce rapportée est reçue dans l'évidement, la pièce rapportée effectue un ajustement avec serrage entre la paroi de l'évidement, la pièce rapportée, la base de dent et la surface intérieure opposée du sabot à dent.

13. Sabot à dent ou ensemble de dent selon une quelconque revendication précédente, dans lequel la pièce rapportée est fixée à la dent par des moyens de fixation supplémentaires (64).

14. Sabot à dent ou ensemble de dent selon la revendication 13, dans lequel les moyens de fixation supplémentaires comprennent un dispositif de serrage (64) destiné à serrer la pièce rapportée sur la dent.

15. Sabot à dent ou ensemble de dent selon la revendication 14, dans lequel le dispositif de serrage (64) est espacé de la base de dent et la pièce rapportée s'étend à partir de la base de dent jusqu'à l'emplacement du dispositif de serrage.

16. Sabot à dent ou ensemble de dent selon la revendication 14 ou 15, dans lequel le dispositif de serrage est positionné sur la dent dans une position qui ne rencontrera normalement pas le sol, durant l'utilisation.

17. Procédé pour fixer un sabot à dent à une dent, comprenant les étapes consistant à fournir une dent (12) comportant une base de dent (26), fournir un sabot à dent (14) comportant une ouverture (36) agencée pour recevoir la base de dent, une formation (46) contre laquelle une partie arrière de la base de dent (62) peut prendre appui, formée sur la partie inférieure de la surface intérieure (44) du sabot à dent qui définit l'ouverture (36), et un évidement (48) agencé pour recevoir une pièce rapportée de fixation de dent (16), fournir une pièce rapportée de fixation de dent (16), agencer le sabot sur la base de sorte que la base s'étende dans l'ouverture agencée pour recevoir la base et qu'une partie arrière de la base prenne appui contre la formation, et insérer la pièce rapportée de fixation de dent dans l'évidement avec un ajustement avec serrage de sorte que la prise d'appui de la formation avec la partie arrière de la base empêche le sabot d'être retiré de la base.

18. Procédé pour fixer un sabot à dent à une dent selon la revendication 17, dans lequel le procédé comprend en outre l'étape consistant à fixer la pièce rapportée à la dent.

19. Procédé pour fixer un sabot à dent à une dent selon la revendication 18, dans lequel l'étape consistant à fixer la pièce rapportée à la dent est effectuée au moyen d'un dispositif de serrage (64).
